# EUROPÄISCHE PATENTSCHRIFT

(11) **EP 2 209 281 B1**
(45) Veröffentlichungstag und Bekanntmachung des Hinweises auf die Patenterteilung: **14.03.2018**
(21) Anmeldenummer: 09150642.8
(22) Anmeldetag: 15.01.2009
(51) Int. Cl.: H04L 12/24, H04L 29/08

(54) **Beurteilung einer VoIP-Paketerzeugung und Paketübertragung und Indikation an den an der VoIP-Kommunikation beteiligten Endpunkten**
Assessing a VoIP packet creation and packet transfer and indication at the end points involved in a VoIP communication
Évaluation de la production d'un paquet VoIP et transmission de paquet et indication sur les points terminaux participant à la communication VoIP

(43) Veröffentlichungstag der Anmeldung: 21.07.2010
(73) Patentinhaber: VoIPFuture GmbH, 20097 Hamburg (DE)
(72) Erfinder: Zäncker, Olaf, 23843 Bad Oldesloe (DE)
(74) Vertreter: Vossius & Partner Patentanwälte Rechtsanwälte mbB

(56) Entgegenhaltungen:
- WO-A-02/30042
- US-A1- 2003 048 812
- US-A1- 2007 058 546
- US-A1- 2008 062 887

## Beschreibung

Die Erfindung betrifft das Gebiet der Telefonie über Datennetze, kurz VoIP (Voice over Internet Protocol). Insbesondere betrifft die Erfindung ein Verfahren und eine Vorrichtung zur Beurteilung einer VoIP-Paketerzeugung und -Paketübertragung und Indikation an den, an der VoIP-Kommunikation beteiligten Endpunkten.

Auf Grund der Tatsache, dass die traditionelle, drahtgebundene (TDM = Time Division Multiplex) Telefonie über ein eigenes Netzwerk, eigene dedizierte Geräte für die Vermittlung und Weiterleitung von Gesprächen und dedizierte Endgeräte verfügt, wird permanent eine hohe Sprachqualität erreicht. Durch die Exklusivität der Infrastruktur besteht im Bereich der traditionellen Telefonie keine Notwendigkeit, der Gesprächsqualität große Beachtung zu schenken.

Zunehmend wird die TDM-Telefonie jedoch durch VoIP (Voice over Internet Protocol) ergänzt bzw. substituiert. Im Gegensatz zur TDM-Telefonie stehen bei der VoIP-Telefonie weder ein eigenes Netzwerk, noch eigene Komponenten für die Vermittlung und Weiterleitung von Gesprächen zur Verfügung. In einigen Fällen (bekannt als "Soft-Client") ist dem Dienst VoIP nicht einmal ein dediziertes Endgerät zugeordnet.

VoIP (Voice over Internet Protocol) ist eine Technologie welche es ermöglicht, den kontinuierlichen Audiostrom eines Telefonates in Form von Datenpaketen über ein paketorientiertes Netzwerk (IPNetzwerk) zu übertragen. Im Gegensatz zu sonstigem Datenverkehr in IP-Netzwerken erfordert das Medium Sprache (Audio), wenn es in Form von Datenpaketen übertragen werden soll, einen kontinuierlichen Datenfluss, der Pakete in immer gleichen zeitlichen Abständen (isochron) überträgt. IP-Netzwerke sind jedoch grundsätzlich nicht dafür ausgelegt, die isochrone Übertragung eines Stromes von Datenpaketen zu gewährleisten. Darüber hinaus konkurrieren die VoIP-Datenpakete mit den Datenpaketen anderer Anwendungen um dieselbe Bandbreite bzw. Übertragungsinfrastruktur (IP-Netzwerk und dessen aktive Komponenten).

IP-Netzwerke sind somit nicht dafür ausgelegt, eine garantierte Übertragung zu ermöglichen. So kommt es selbst bei priorisierter Übertragung der VoIP-Pakete zu Verzögerungen (Delay), Schwankungen in der Gleichmäßigkeit der Übertragung (Jitter) und Verlusten von VoIP-Paketen. Die Ursachen für die Störungen von VoIP können entweder in der Übertragung (also im verwendeten IP-Netzwerk) oder im VoIP-System lokalisiert sein. Als Ursachen kommen Probleme bei der Implementierung, der Konfiguration und/oder der Auslastung in Frage.

Der V oIP-Datenverkehr unterliegt also zahlreichen Störeinflüssen mit dem Resultat schlechter Qualität - z.B. schlechter Sprachqualität. Zur weitestgehenden Vermeidung schlechter Qualität empfehlen die Hersteller von VoIP-Systemen üblicherweise, die IP-Netzwerke vor dem geplanten Einsatz eines VoIP-Systems auf ihre VoIP-Fähigkeit hin zu untersuchen. Diese Untersuchung (auch VoIP-Assessment, VoIP Pre-Deployment, etc., genannt) erfolgt, indem künstlicher VoIP-Verkehr in das zu untersuchende IP-Netzwerk eingespeist und nach der Übertragung auf seine Qualität hin bewertet wird. Im Falle schlechter Untersuchungsergebnisse kann das IP-Netzwerk in seiner Leistung erweitert werden (mehr Bandbreite, Priorisierung von Verkehr, physikalische und/oder logische Restrukturierung, andere aktive Komponenten, etc.).

Beim IP-Netzwerk kann es sich um ein lokales Datennetz (LAN) und/oder ein Weitverkehrsnetz (WAN) handeln. Konsequenterweise wird auch VoIP über WLAN transportiert (VoWLAN). Zusätzlich zu den, für drahtgebundene IP-Netzwerke üblichen Einflussgrößen kommt bei WLAN u.a. die Güte einer Funkzelle selbst, sowie das Verlassen bzw. Wechseln von Funkzellen als Störgröße hinzu.

VoIP, dass keine Dienstgüte garantieren kann, wird in zunehmendem Maße die traditionelle TDM-Telefonie als Sprachdienst ersetzen. Dies führt mit Blick auf den Benutzer zu Problemen, da einerseits der Sprachdienst als "mission critical" bezeichnet werden kann, die Benutzer aber gleichzeitig die hohe Qualität der TDM-Telefonie erwarten. Insbesondere bei Verwendung mobiler Endpunkte treten weitere Einflüsse auf, die zur Störung der VoIP-Qualität führen. Häufig führen die Kommunikationspartner (Benutzer) das Gespräch trotz schlechter oder bereits unterbrochener Verbindung noch einige Zeit weiter, ohne sich der Störung oder gar Unterbrechung bewusst zu sein.

Herkömmliche Verfahren zur Qualitätsbestimmung in paket-basierten Kommunikationsnetzen sind in US 2008/062887, WO 02/30042, US 2007/058546 und US 2003/048812 beschrieben.

Somit liegt der Erfindung die Aufgabe zugrunde, einen Weg anzugeben, mit dem einem Benutzer von VoIP in Echtzeit bzw. zeitnah eine Beurteilung der gerade durchgeführten VoIP Paketerzeugung und -Paketübertragung ermöglicht wird. Diese Aufgabe wird mit den Merkmalen der Patentansprüche gelöst.

Gemäß einem ersten Aspekt stellt die Erfindung ein Verfahren zur Beurteilung einer IP-Netzwerk-Paketerzeugung und -übertragung bereit. Erfindungsgemäß geschieht dies durch endpunktseitiges Empfangen einer VoIP-Paketfolge über eine IP-Netzwerk-Verbindung; endpunktseitiges Bestimmen der Qualität (QRX) der empfangenen Paketfolge (RX); Zuführen der bestimmten Qualitätsinformation (QRX) einer Qualitätsindikation; und endpunktseitige Indikation der Qualitätsinformation.

Das Verfahren weist den weiteren Schritt des endpunktseitigen Bestimmens der Qualität (QTX) der vom Endpunkt in seiner Funktion als Sender gesendeten Paketfolge (TX) auf, wobei die der Qualitätsindikation zugeführte Qualitätsinformation aus der Qualität (QRX) der empfangenen Paketfolge (RX), der Qualität (QTX) der vom Endpunkt ins seiner Funktion als Sender gesendeten Paketfolge (TX), oder einer Kombination von Beidem bestehen kann. Im Fall eines Endpunktes A handelt es sich um die Qualitätsinformationen QRXA und QTXA.

Die Bestimmung der Qualität erfolgt vorzugsweise kontinuierlich oder zyklisch während der Übertragung einer VoIP-Paketfolge und/oder am Ende der Übertragung einer VoIP-Paketfolge.

Das Erzeugen von Qualitätsinformationen für ungestörte Sequenzen innerhalb einer VoIP-Paketfolge oder vollständig ungestörter Übertragungen von VoIP-Paketfolgen wird vorzugsweise reduziert oder vollständig unterdrückt. Die erzeugten Qualitätsinformationen bestehen vorzugsweise in gut/schlecht-Aussagen oder in einer, die graduelle Abweichung der Qualität von Normal- bzw. Sollzustand ausdrückenden Aussage. Die Qualitätsinformationen können sich auf das gesamte VoIP-Gespräch beziehen, oder nur auf Teile davon.

Jeder Endpunkt (A, B) übermittelt die in seiner Funktion als Sender (A, B) ermittelte Sendequalität einer VoIP-Paketfolge (QTXA, QTXB) dem jeweils anderen Endpunkt. Alternativ aber auch ergänzend übermittelt ferner jeder Endpunkt (A, B) die in seiner Funktion als Empfänger (A, B) ermittelte Empfangsqualität einer VoIP-Paketfolge (QRXA, QRXB) dem jeweils anderen Endpunkt. Es ist weiter vorgesehen, dass ein Endpunkt (A, B) der VoIP-Paketerzeugung und -Paketverbindung die Differenz aus der Qualitätsinformation, die in der Funktion als Empfänger bestimmt wird, und der Qualitätsinformation, die vom jeweils anderen Endpunkt in dessen Funktion als Sender übertragen wird, bildet. Die so gebildete Differenz zweier Qualitätsinformationen repräsentiert die Qualität der IP-Netzwerk-Paketverbindung (QRXA-QTXB = Qualität der IP-Netzwerk-Paketverbindung in Rückrichtung bzw. QRXB-QTXA = Qualität der IP-Netzwerk-Paketverbindung in Hinrichtung). Alternativ oder aber auch zusätzlich bildet ein Endpunkt (A, B) die Differenz QTXA-QRXB bzw. QTXB-QRXA aus der Qualitätsinformation, die in seiner Funktion als Sender bestimmt wird, und der Qualitätsinformation, die vom jeweils anderen Endpunkt in dessen Funktion als Empfänger übertragen wird.

Die Qualitätsindikation erfolgt vorzugsweise in Form eines optischen und/oder akustischen Indikators. Dabei kann im Falle einer optischen Anzeige der zurückliegende Verlauf der Qualitätsinformation aufsummiert angezeigt werden.

Erfindungsgemäß wird beispielsweise als Qualitätsinformation der Abstand und die Varianz des Abstandes einzelner VoIP-Pakete oder eine "höherwertige" Information, welche die konkrete Ursache der eingeschränkten Qualität ausdrückt (z.B.: "Konfiguration der SampleRate des Senders fehlerhaft" oder "Auslastung des IP-Netzwerkes / Pufferung von Paketen", o.ä.) ausgewertet.

Gemäß einem weiteren Aspekt wird eine Vorrichtung zur Beurteilung einer VoIP-Paketerzeugung und -Paketübertragung bereitgestellt. Diese weist auf: einen endpunktseitigen Empfänger zum Empfangen einer VoIP-Paketfolge (RX) über eine IP-Netzwerk-Verbindung; eine endpunktseitige Einrichtung zum Bestimmen der Qualität (QRX) der empfangenen VoIP-Paketfolge (RX); eine Einrichtung zum Zuführen der bestimmten Qualitätsinformation zu einer Qualitätsindikation; und eine endpunktseitige Indikationseinrichtung zur Indikation der Qualitätsinformation (QRX).

Schließlich wird gemäß einem weiteren erfindungsgemäßen Aspekt ein VoIP-Paketerzeugungs- und -Paketübertragungssystem mit einem ersten Endpunkt (A) mit einem Sender und einem Empfänger und einem zweiten Endpunkt (B) mit einem Sender und einem Empfänger bereitgestellt. Mindestens einer der beiden Empfänger (A, B) weist eine Einrichtung zum Bestimmen der Empfänger-Qualität (QRX, z.B. QRXA für Endpunkt A) der empfangenen VoIP-Paketfolge (RX, z.B. RXA am Endpunkt A) vom jeweils anderen Endpunkt auf. Der jeweils andere Endpunkt weist eine Einrichtung zum senderseitigen Bestimmen der Sende-Qualität (QTX, z.B. QTXB für Endpunkt B) dieser gesendeten VoIP-Paketfolge (TX, z.B. TXB am Endpunkt B) und zum Übertragen der Sende-Qualitätsinformation (QTX, z.B. QTXB für Endpunkt B) zum Empfängerendpunkt (z.B. Endpunkt A) auf. Ferner weist der Empfängerendpunkt (z.B. Endpunkt A) eine Einrichtung zum Zuführen der bestimmten Qualitätsinformation zu einer Qualitätsindikation auf, wobei die Qualitätsinformation aus der Empfänger-Qualität (z.B. QRXA am Endpunkt A), der Sende-Qualität (z.B. QTXB am Endpunkt B) oder aus der Differenz von beiden besteht, und eine Indikationseinrichtung zur Indikation der Qualitätsinformation.

So weist (i) der Empfängerendpunkt eine Einrichtung zur Bildung der Differenz beider Qualitätsinformationen (QRXA-QTXB bzw. QRXB-QTXA) und zum Zuführen der bestimmten Qualitätsinformation zu einer Qualitätsindikation auf, wobei die Qualitätsinformation aus der Differenz von Empfänger-Qualität und der Sende-Qualität des jeweils anderen Endpunktes ermittelt wird; und/oder (ii) der Senderendpunkt eine Einrichtung zur Bildung der Differenz beider Qualitätsinformationen (QTXA-QRXB bzw. QTXB-QRXA) und zum Zuführen der bestimmten Qualitätsinformation zu einer Qualitätsindikation auf, wobei die Qualitätsinformation aus der Differenz von Sende-Qualität und der Empfänger-Qualität des jeweils anderen Endpunktes ermittelt wird.

Der technische Vorteil der Erfindung liegt in der Indikation einer Dienst- bzw. Applikationsbezogenen Qualitätsinformation für VoIP, die es ermöglicht, am sendenden Endpunkt (z.B. Endpunkt B; das entspricht der Rückrichtung) u.a. die Empfangsqualität des gesendeten VoIP-Gespräches auf Seiten des Empfängers (z.B. QRXA) darzustellen. Weiterhin wird als Vorteil angesehen, dass durch den Austausch von Qualitätsinformationen zwischen Sender und Empfänger an beiden Endpunkten die Berechnung und Indikation einer Qualitätsdifferenz, die somit der Qualität der Übertragungsstrecke (IP-Netzwerk) entspricht, möglich ist. Darüber hinaus ist es für bestimmte Arten von Endpunkten vorteilhaft, die Qualitätsinformation alternativ durch eine akustische "in band" Indikation zu realisieren.

Die Erfindung wird nun anhand der beigefügten Figuren näher erläutert. Es zeigen:
- Fig. 1: eine schematische Darstellung einer bevorzugten Ausführungsform des Erfindung;
- Fig. 2: eine schematische Darstellung einer weiteren bevorzugten Ausführungsform des erfindungsgemäßen Verfahrens;
- Fig. 3: Beispiel 1 für eine bevorzugte Ausführungsform nach Fig. 2;
- Fig. 4: Beispiel 2 für eine bevorzugte Ausführungsform nach Fig. 2; und
- Fig. 5: ein Beispiel einer erfindungsgemäßen optischen Qualitätsanzeige an einem Endpunkt.

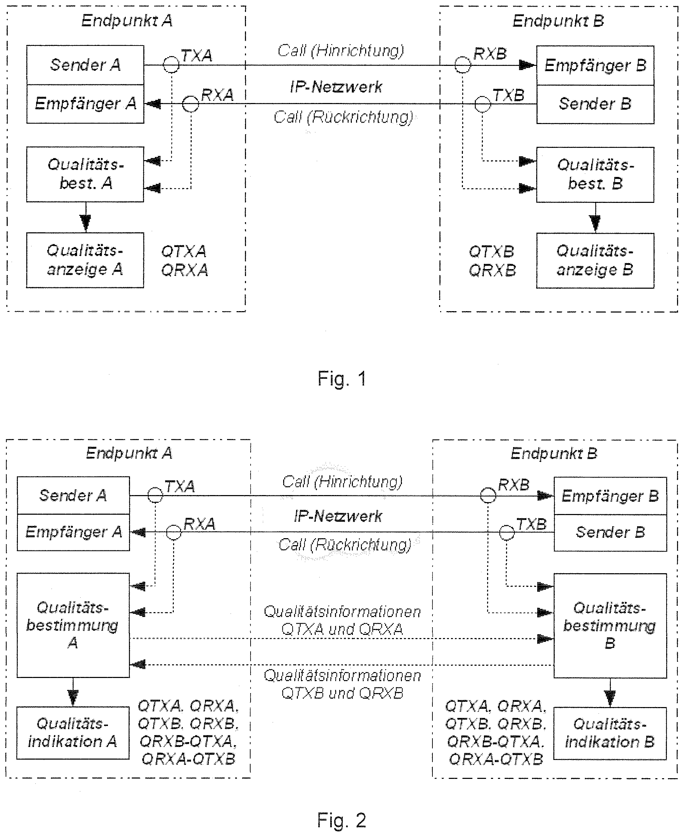

Fig. 1 zeigt eine schematische Darstellung einer bevorzugten Ausführungsform der Erfindung. In dieser Ausführungsform erfolgt in dem Endpunkt A oder in dem Endpunkt B oder beiden Endpunkten eine Überwachung der Erzeugung der VoIP-Paketfolgen und der IP-Netzwerk-Verbindung. Insbesondere zeigt Fig. 1 zwei Endpunkte A und B, die miteinander in Kommunikation stehen. Für einen VoIP-Call in Rückrichtung, also von Endpunkt B zu Endpunkt A, ist Endpunkt B als Sender B anzusehen, während Endpunkt A der Empfänger A ist.

Im Endpunkt A erfolgt zunächst eine Bestimmung der vom Empfänger A empfangenen Qualität QRXA (Rückrichtung, von Endpunkt B gesendet = TXB) des Dienstes VoIP, also der über die IP-Netzwerk-Verbindung empfangenen VoIP-Paketfolge. Vorzugsweise wird im Endpunkt A zusätzlich auch die Qualität der vom eigenen Sender A gesendeten (Sprach-) Paketfolge QTXA (Sender A = TXA, Hinrichtung) bestimmt. Das Ergebnis der Qualitätsbestimmung A am Endpunkt A wird dann am Endpunkt A einer Qualitätsindikation zugeführt. Abschließend wird dem Benutzer am Endpunkt A alternativ die Qualitätsinformation QRXA, QTXA bzw. beide gleichzeitig angezeigt. Dies erfolgt beispielsweise optisch und/oder akustisch.

In Hinrichtung fungiert Endpunkt A als Sender A, dessen von Endpunkt B empfangene Qualität QRXB am Endpunkt B beurteilt wird. Vorzugsweise wird dort auch die Qualität der eigenen, vom Endpunkt B gesendeten VoIP-Paketfolge QTXB bestimmt. Endpunkt B kann für den Benutzer am Endpunkt B somit alternativ die Qualitätsinformationen QRXB, QTXB bzw. beide gleichzeitig einer optischen und/oder akustischen Indikation zuführen.

Der Begriff "Endpunkt" gilt dabei als Sammelbegriff für drahtgebundene oder drahtlose (mobile) VoIP-Geräte bzw. VoIP-Applikationen, die einem Benutzer oder einer Benutzergruppe zugeordnet sind. Dabei kann es sich um IP-Telefone, DSL-Boxen, Integrated Access Devices (IADs) (Triple Play, Quadrupel Play), Media Gateways, Session Border Controller und ähnliche Geräte handeln. Weiterhin ist im Interesse der Einfachheit der Darstellung in Fig. 1 eine bidirektionale VoIP-Kommunikation gewählt. Grundsätzlich gilt das Gesagte jedoch auch für eine Kommunikation, an der mehr als zwei Endpunkte teilnehmen, wie z.B. eine VoIP-Telefonkonferenz oder allgemein eine Point-to-Multipoint Verbindung. Weiterhin ist das Verfahren auch für andere Übertragungsverfahren (z.B. Mobiltelefonie) oder Medien (z.B. Video) anwendbar.

Sowohl die Bestimmung, als auch die Indikation der Qualitätsinformation erfolgt vorzugsweise kontinuierlich bzw. zyklisch während des VoIP-Gespräches (einer VoIP-Paketfolge) und/oder am Ende eines VoIP-Gespräches (einer VoIP-Paketfolge). Weiterhin kann - zum Zwecke der Reduzierung der Information auf das Wesentliche - optional die Erzeugung und Indikation von Qualitätsinformationen für ungestörte Sequenzen eines V oIP-Gespräches oder für komplett ungestörte VoIP-Gespräche reduziert oder gänzlich unterdrückt werden. In diesem Fall der Reduzierung auf schlechte Qualität würde die Indikation / Anzeige der Qualität den Charakter einer Qualitätswarnung haben.

Fig. 2 zeigt eine schematische Darstellung einer weiter bevorzugten Ausführungsform des erfindungsgemäßen Verfahrens.

In dieser bevorzugten Ausführungsform tauschen die an einer VoIP-Kommunikation beteiligten Endpunkte A und B die Ergebnisse ihrer jeweiligen Qualitätsbestimmung A (QTXA, QRXA) bzw. B (QTXB, QRXB) untereinander aus. Dabei kann der Austausch der Qualitätsinformation kontinuierlich bzw. zyklisch während des VoIP-Gespräches und/oder am Ende eines VoIP-Gespräches erfolgen.

Die Art der zwischen beiden Endpunkten A und B ausgetauschten Qualitätsinformation kann entweder den Charakter einer reinen gut/schlecht-Aussage besitzen, oder aber die graduelle Abweichung der ermittelten, wirklichen Qualität vom Normal- bzw. Sollzustand der Qualität ausdrücken. Sowohl die gut/schlecht-Aussage, als auch die graduelle Qualitätsinformation kann sich auf ein komplettes VoIP-Gespräch beziehen, oder aber nur auf die von schlechter Qualität betroffenen Sequenzen eines VoIP-Gespräches.

In der in Fig. 2 gezeigten bevorzugten Ausführungsform verfügen die an einer bilateralen VoIP-Kommunikation beteiligten Endpunkte nach dem gegenseitigem Austausch der Qualitätsinformationen somit über insgesamt vier verschiedene Qualitätsinformationen (QTXA, QRXA, QTXB, QRXB) - jeweils zwei durch die Qualitätsbestimmung des eigenen Endpunktes erzeugte Qualitätsinformationen und zwei, durch die Qualitätsbestimmung der Gegenseite erzeugte und von dieser empfangene Qualitätsinformationen. Damit sind die Endpunkte (z.B. Endpunkt A) in der Lage, die auf der Gegenseite (Endpunkt B) empfangene Qualität (QRXB) anzuzeigen oder aus der Differenz zweier Qualitätsinformationen eine neue Qualitätsinformation (z.B. QRXB-QTXA, das entspricht - bezogen auf die Hinrichtung - der Differenz aus empfangener und gesendeter Qualität und damit dem Beitrag des IP-Netzwerkes zur Qualitätsveränderung bei Betrachtung der Übertragung von Endpunkt A zu Endpunkt B) zu bestimmen und einer Indikation zuzuführen. Desgleichen kann der selbe Endpunkt (z.B. Endpunkt A) auf Grund des Vorliegens aller vier Qualitätsinformationen natürlich auch für die Rückrichtung die Differenz der Qualitätsinformationen (z.B. QRXA-QTXB) bilden und anzeigen. Die für Endpunkt A gemachten Aussagen gelten sinngemäß auch für den Endpunkt B.

Die beiden folgenden Figuren erläutern, in welche Richtung die Qualitätsinformation übertragen werden und welcher der beiden, an einer bilateralen Kommunikation beteiligten Endpunkte die Differenzbildung vornehmen kann.

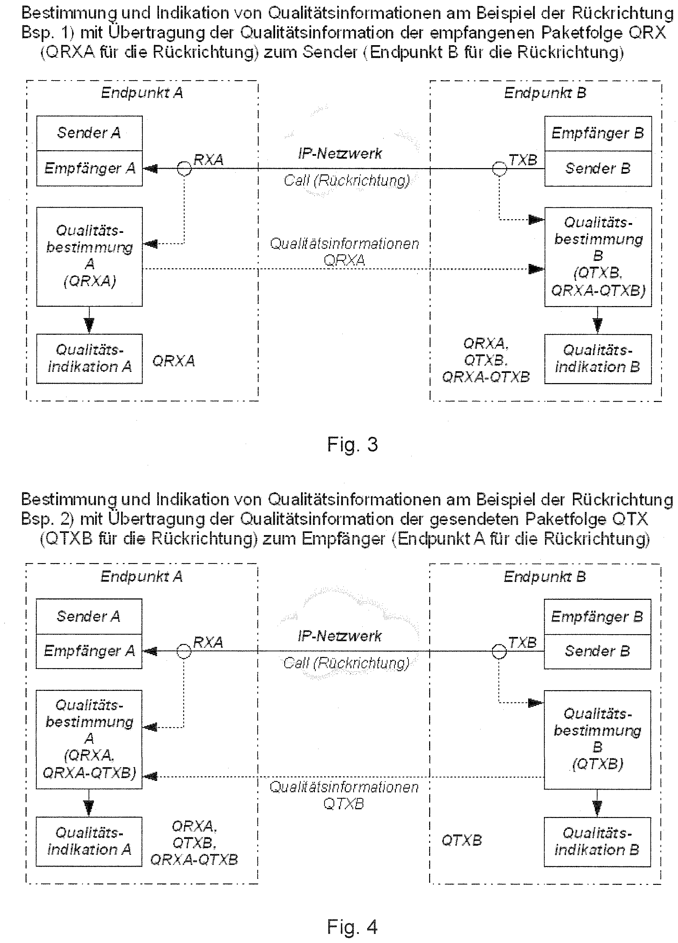

Fig. 3 konkretisiert die Darstellung aus Fig. 2 an Hand Beispiel 1. Beispiel 1 erläutert die Bestimmung und Indikation der Qualitätsinformation an Hand der Rückrichtung (Endpunkt B sendet und Endpunkt A empfängt) des VoIP-Gesprächs. Die Konkretisierung bezieht sich im Wesentlichen auf die Übertragung der Qualitätsinformation und die daraus resultierende Möglichkeit der Differenzbildung. Alle Ausführungen in Beispiel 1 zur Rückrichtung gelten dabei sinngemäß auch für die Hinrichtung.

Der sendende Endpunkt B bestimmt die Sendequalität QTXB der durch ihn gesendeten VoIP-Paketfolge TXB, der empfangende Endpunkt bestimmt die Empfangsqualität QRXA der von ihm empfangenen VoIP-Paketfolge RXA, welche der von Endpunkt B gesendeten VoIP-Paketfolge TXB entspricht. Der empfangende Endpunkt A überträgt die Information zur Empfangsqualität (QRXA) der durch ihn empfangenen VoIP-Paketfolge (RXA) an den sendenden Endpunkt B. Damit ist Endpunkt B in der Lage, zusätzlich auch die Differenz zweier Qualitätsinformationen zu bilden - in diesem Falle aus der an Endpunkt A empfangenen Qualität (QRXA) und der von Endpunkt B gesendeten Qualität (QTXB). Das Ergebnis der Differenzbildung (QRXA - QTXB) entspricht der Qualität der Übertragung der VoIP-Paketfolge in Rückrichtung. Damit stehen dem Endpunkt B drei verschiedene, teils auf der Gegenseite (QRXA) ermittelte Qualitätsinformationen (QRXA, QTXB, QRXA-QTXB) zur Verfügung, welche alternativ oder in beliebiger Kombination der Indikation der Qualität am Endpunkt B zugeführt werden können. Endpunkt A steht lediglich die Qualitätsinformation (QRXA) der durch ihn empfangenen VoIP-Paketfolge (RXA) für die Indikation der Qualität an Endpunkt B zur Verfügung.

Stellt man sich das in Beispiel 1 für die Rückrichtung geschilderte Verfahren in gleicher Weise für die Hinrichtung vor, so verfügen beide Endpunkte A und B jeweils über vier Qualitätsinformationen, welche alternativ oder in beliebiger Kombination der Indikation zugeführt werden können.

Fig. 4 konkretisiert die Darstellung aus Fig. 2 an Hand eines weiteren Beispiels 2. Beispiel 2 erläutert ebenso wie Beispiel 1 die Bestimmung und Indikation der Qualitätsinformation an Hand der Rückrichtung (Endpunkt B sendet und Endpunkt A empfängt) des VoIP-Gesprächs. Die Konkretisierung bezieht sich im Wesentlichen auf die Übertragung der Qualitätsinformation und die daraus resultierende Möglichkeit der Differenzbildung - die sich in Bezug auf die Richtung der Übertragung der Qualitätsinformation und des Endpunktes, welcher die Differenzbildung vornimmt, von Beispiel 1 unterscheidet. Alle Ausführungen in Beispiel 2 zur Rückrichtung gelten sinngemäß auch für die Hinrichtung.

Im Unterschied zu Beispiel 1 nimmt in Beispiel 2 der sendende Endpunkt B die Übertragung der Qualitätsinformation (QTXB) an den empfangenden Endpunkt A vor. Damit ist der empfangende Endpunkt A in der Lage, eine Differenzbildung zweier Qualitätsinformationen (QRXA und QTXB) durchzuführen. In Beispiel 2 stehen Endpunkt A drei, teils auf der Gegenseite erzeugte Qualitätsinformationen (QRXA, QTXB, QRXA-QTXB) zur Verfügung, welche alternativ oder in beliebiger Kombination der Indikation der Qualität am Endpunkt A zugeführt werden können. Endpunkt B steht lediglich die Qualitätsinformation (QTXB) der durch ihn gesendeten VoIP-Paketfolge (TXA) für die Indikation der Qualität zur Verfügung.

Stellt man sich das in Beispiel 2 für die Rückrichtung geschilderte Verfahren in gleicher Weise für die Hinrichtung vor, so verfügen beide Endpunkte A und B jeweils über vier Qualitätsinformationen, welche alternativ oder in beliebiger Kombination der Indikation zugeführt werden können.

Beide Varianten (Beispiel 1 = Fig. 3 und Beispiel 2 = Fig. 4) stellen zunächst Alternativen dar, jedoch besteht auch die Möglichkeit der Kombination beider Varianten in den Endpunkten.

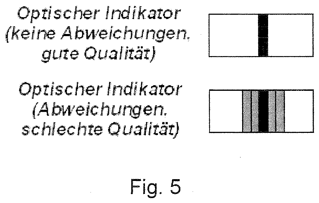

Die Art der Indikation der Qualität kann erfindungsgemäß variieren. Im einfachsten Fall kann es sich um eine gut/schlecht Aussage handeln, jedoch sind auch komplexere Qualitätsindkationen wie beispielsweise in Form eines Balkens variabler Breite möglich. Dies ist beispielsweise in Fig. 5 dargestellt. Ein solcher Balken-Indikator kann unterschiedliche Ausführungen haben und entweder eine aufbereitete, höherwertige Qualitätsinformation repräsentieren, oder direkt aus einem KPI (Key Performance Indicator) abgeleitet werden, wie beispielsweise dem Abstand der VoIP-Pakete (Interarrival Time) bzw. deren Varianz. Im letzteren Fall würde ein z.B. in der Mitte des Indikators befindlicher Balken auf den Normalzustand des Paketabstandes (z.B. 20 ms) normiert sein. Bei guter Qualität (oberer Teil von Fig. 5) ist somit nur der mittlere Balken zu sehen. Abweichungen bzw. negative oder positive Varianzen des Abstandes der VoIP-Pakete (Jitter) in Bezug auf den Normalzustand würden sich in entsprechenden zusätzlichen Balken zu beiden Seiten des mittleren Balkens ausdrücken. Alternativ kann der, den Normalzustand symbolisierende Balken auch außerhalb der Mitte liegen, da auch die negativen und positiven Abweichungen des Paketabstandes (Jitter) nicht notwendigerweise symmetrisch zum Normalzustand auftreten. Grundsätzlich sind bei einer anderen Form der Sprachübertragung als VoIP (z.B. bei bei anderen Medien als Sprache (z.B. Video) oder bei anderen Protokollen als IP auch andere KPI möglich.

Sofern sich die Ursache eines VoIP-Qualitätsproblems lokalisieren lässt (IP-Netzwerk bzw. VoIP-System), wird vorzugsweise auch diese Information zur Anzeige gebracht. Ist es darüber hinaus möglich, den Charakter eines VoIP-Qualitätsproblems zu bestimmen (Implementierungsproblem, Konfigurationsproblem, Performanceproblem), so kann die Anzeige auch dies berücksichtigen. Lässt sich die Störung lokalisieren oder der Charakter der Störung bestimmen, so erfolgt vorzugsweise eine Anzeige als eindeutiges Symbol (Endpunkt, Netzwerk) und/oder im Klartext.

Die Lokalisierung von VoIP-Qualitätsproblemen kann z.B. durch die Interpretation (z.B. durch Mustererkennung und Ableiten einer entsprechenden Information) der gemessenen Parameter selbst, welche letztlich die Qualitätsinformation bilden, erfolgen.

Weiterhin ist die Lokalisierung von VoIP-Qualitätsproblemen auch dadurch möglich, dass die Qualitätsbestimmung an zwei Punkten, bereits auf der Sendeseite (QTX), also am Beginn der Übertragungsstrecke (z.B. IP-Netzwerk) und auf der Empfangsseite (QRX), also am Ende der Übertragungsstrecke erfolgt. Die Lokalisierung ist somit folgendermaßen möglich:
- Die Qualität der Sendeseite (QTX) stellt per se bereits eine Lokalisierung für den Sender als Ursache für schlechte Qualität dar
- Die Differenz (QRX-QTX) aus der Qualität einer VoIP-Paketfolge auf der Empfangsseite (QRX) und der Qualität der gleichen VoIP-Paketfolge auf der Sendeseite (QTX) entspricht der Lokalisierung für die Übertragungsstrecke (z.B. IP-Netzwerk) als Ursache für die schlechte Qualität.

Während sich die bisherigen Ausführungen zur Übertragungsstrecke immer auf die gesamte Übertragungsstrecke (z.B. der gesamte Abschnitt eines lokalen Netzwerkes LAN zwischen zwei IP-Telefonen) bezogen, können bei Verwendung entsprechender Einrichtungen für die Qualitätsbestimmung natürlich auch Teilabschnitte einer Übertragungsstrecke (im Falle des LAN z.B. Uplink, Backbone, Downlink) auf ihre Qualität hin untersucht werden.

Grundsätzlich können erfindungsgemäß alle vorgenannten Varianten einer Qualitätsindikation kombiniert werden. Entsprechend Art und Typ des betreffenden Endpunktes und der anzuzeigenden optischen Qualitätsinformation erfolgt die Anzeige als ja/nein-Information (beispielsweise über eine oder mehrere LEDs = Light Emitting Diode) und/oder in komplexerer Form über ein Display (maximale Flexibilität in Bezug auf die Form der Darstellung - Balken und/oder Symbole und/oder Klartext, etc.).

Ergänzend zu einer rein kontinuierlichen oder zyklischen optischen Indikation der VoIP-Qualität in Echtzeit während eines VoIP-Gespräches am Endpunkt ist eine Anzeige mit Verzögerung bzw. "Nachzieh Effekt" (Hysterese) möglich. Das ist bei Endpunkten sinnvoll, bei denen man nicht gleichzeitig telefonieren und einen optischen Indikator betrachten kann (z.B. Mobiltelefon am Ohr eines Benutzers). Alternativ zu einer (zeitlichen) Hysterese ist eine kumulative optische Indikation möglich, welche eine summarische Information ("Gedächtnis") über den bisherigen Verlauf der Qualitätsinformation eines VoIP-Gespräches bereitstellt.

Alternativ zum bevorzugten Lösungsansatz der Anzeige der empfangenen Qualität (QRX; QRXA für Endpunkt A) kann ein Endpunkt (Endpunkt A) auch die eigene, gesendete Qualität (QTXA) anzeigen. Das ist besonders dann von Interesse, wenn es sich bei dem Endpunkt um ein Gerät handelt, welches nicht dediziert dem Dienst VoIP zur Verfügung steht, wie z.B. ein PC, auf dem ein VoIP Soft-Client, aber parallel dazu auch andere Applikationen gleichzeitig laufen können. Eine weitere Alternative zur Indikation der empfangenen oder der gesendeten Qualität besteht in der Indikation der Qualitätsdifferenz (siehe Beschreibung Fig. 3 bzw. 4).

Eine weitere Alternative besteht darin, die Qualität über einen Browser anzuzeigen. Diese Anzeige kann entweder im Gerät selbst erfolgen (z.B. IP-Phone mit Display und Browser), oder in einem separaten Gerät (z.B. PC).

Alternativ zur Indikation der VoIP-Qualität selbst kann die optische Indikation auch darauf beschränkt werden, nur die Abweichung der VoIP-Qualität vom Normalzustand darzustellen. Somit würde bei guter Qualität (Normalzustand, Sollzustand) keine Anzeige erfolgen - sondern erst wenn sich die Qualität verschlechtert, d.h. vom Normalzustand / Sollzustand abweicht.

Neben der optischen Indikation kann alternativ wie beschrieben auch eine akustische Indikation erfolgen. Diese ist immer dann sinnvoll, wenn entweder ein Endpunkte nicht über die Voraussetzungen für eine optische Indikation verfügt (z.B. Fehlen eines Displays), oder die Benutzung eines Endpunktes (z.B. Mobiltelefon am Ohr des Benutzers) das zur eigentlichen Kommunikation zeitgleiche Betrachten eines optischen Indikators nicht zulässt.

Die akustische Indikation kann entweder "in band", d.h. über den zur Kommunikation benutzten Wiedergabekanal (Hörer, Lautsprecher) erfolgen, oder über einen separaten Tongeber. Im Falle der akustischen "in band" Indikation wird erfindungsgemäß beispielsweise eine, die Qualität im Klartext beschreibende Ansage eingespielt. Alternativ wird bei der akustischen "in band" Indikation oder bei Verwendung eines separaten Tongebers ein Tonsignal benutzt, welches sich entsprechend der zu indizierenden Qualität graduell variieren lässt (z.B. Länge eines intermittierenden Tones, Tonhöhe, etc.).

Das Verfahren zur Indikation einer VoIP-Qualitätsinformation an VoIP-Endpunkten ist am Beispiel der Übertragung über reine IP-Netzwerken beschrieben worden. Darüber hinaus kann das beschriebene Verfahren auch dann angewendet werden, wenn das IP-Protokoll über ein anderes Netzwerk übertragen (getunnelt) wird oder die VoIP-Pakete ein anderes Transportprotokoll als IP verwenden. Insbesondere bei Mobiltelefonen, die im Vergleich zu drahtgebundenen Netzwerken über einen unsicheren Übertragungskanal verfügen, kann eine optische und/oder akustische Indikation auch ohne Verwendung von VoIP von Bedeutung sein.

Außer für das Medium Sprache kann das erfindungsgemäße Verfahren auch für andere Medien, wie z.B. Video angewendet werden.

### Legende:

*TX* = *Transmit (gesendete VoIP-Paketfolge)*
*TXA* = *am Endpunkt A gesendete VoIP-Paketfolge*
*TXB* = *am Endpunkt B gesendete VoIP-Paketfolge*
*QTX* = *Qualitätsinformation für eine gesendete VoIP-Paketfolge*
*QTXA* = *am Endpunkt A ermittelte Qualitätsinformation für die von Endpunkt A gesendete VoIP-Paketfolge*
*QTXB* = *am Endpunkt B ermittelte Qualitätsinformation für die von Endpunkt B gesendeten VoIP-Paketfolge*
*RX* = *Receive (empfangene VoIP-Paketfolge)*
*RXA* = *am Endpunkt A empfangene VoIP-Paketfolge*
*RXB* = *am Endpunkt B empfangene VoIP-Paketfolge*
*QRX* = *Qualitätsinformation für eine empfangene VoIP-Paketfolge*
*QRXA* = *am Endpunkt A ermittelte Qualitätsinformation für die von Endpunkt A empfangene VoIP-Paketfolge*
*QRXB* = *am Endpunkt B ermittelte Qualitätsinformation für die von Endpunkt B empfangene VoIP-Paketfolge*

## Patentansprüche

1. Verfahren zur Beurteilung einer VoIP-Paketerzeugung und -Paketübertragung, mit den Schritten:
a) endpunktseitiges Empfangen einer VoIP-Paketfolge (RXA, RXB) über eine IP-Netzwerk-Verbindung;
b) endpunktseitiges Bestimmen der VoIP-Qualität (QRXA, QRXB) der empfangenen VoIP-Paketfolge (RXA, RXB) und endpunktseitiges Bestimmen der VoIP-Qualität (QTXA, QTXB) der vom Endpunkt in seiner Funktion als Sender gesendeten VoIP-Paketfolge (TXA, TXB), wobei ferner jeder Endpunkt (A, B) die in seiner Funktion als Sender (A, B) ermittelte Sende-Signalqualität (QTXA, QTXB) dem jeweils anderen Endpunkt übermittelt, wobei jeder Endpunkt (A, B) die in seiner Funktion als Empfänger (A, B) ermittelte Empfangs-Signalqualität (QRXA, QRXB) dem jeweils anderen Endpunkt übermittelt, und wobei
(i) mindestens ein Endpunkt (A, B) die Differenz aus an diesem Endpunkt (A, B) ermittelter Empfangs-Signalqualität (QRXA, QRXB) und am anderen Endpunkt (B, A) ermittelter Sende-Signalqualität (QTXB, QTXA) aus der Qualitätsinformation, die in seiner Funktion als Empfänger bestimmt wird, und der Qualitätsinformation, die vom jeweils anderen Endpunkt in dessen Funktion als Sender übertragen wird, bildet; und
(ii) der mindestens eine Endpunkt (A, B) die Differenz aus an diesem Endpunkt (A, B) ermittelter Sende-Signalqualität (QTXA, QTXB) und am anderen Endpunkt (B, A) ermittelter Empfangs-Signalqualität (QRXB, QRXA) aus der Qualitätsinformation, die in seiner Funktion als Sender bestimmt wird, und der Qualitätsinformation, die vom jeweils anderen Endpunkt in dessen Funktion als Empfänger übertragen wird, bildet;
c) Zuführen der bestimmten Qualitätsinformation einer Qualitätsindikation, wobei die zugeführte Qualitätsinformation aus der Qualität (QRXA, QRXB) der empfangenen VoIP-Paketfolge (RXA, RXB), der Qualität (QTXA, QTXB) der vom Endpunkt in seiner Funktion als Sender gesendeten VoIP-Paketfolge (TXA, TXB), oder aus der Kombination von Beidem, und beiden Qualitätsdifferenzen besteht; und
d) endpunktseitige Indikation der Qualitätsinformation in Echtzeit.

2. Verfahren nach Anspruch 1, wobei die Bestimmung der Qualität kontinuierlich während einer Paketübertragung und/oder am Ende einer Paketübertragung erfolgt.

3. Verfahren nach einem der vorstehenden Ansprüche, wobei das Erzeugen von Qualitätsinformationen für ungestörte Sequenzen einer Paketübertragung oder vollständig ungestörte Paketübertragungen reduziert oder vollständig unterdrückt wird.

4. Verfahren nach einem der vorstehenden Ansprüche, wobei die erzeugten Qualitätsinformationen in gut/schlecht-Aussagen oder in einer, die graduelle Abweichung der Qualität von Normal- bzw. Sollzustand ausdrückenden Aussage besteht und / oder sich die Qualitätsinformationen auf das gesamte VoIP-Gespräch beziehen, oder nur auf Teile davon.

5. Verfahren nach einem der Ansprüche 1 bis 4, wobei ein Endpunkt (A, B) die Differenz der Qualitätsinformationen dem jeweils anderen Endpunkt übermittelt.

6. Verfahren nach einem der vorstehenden Ansprüche, wobei Schritt d) in Form eines optischen Indikators erfolgt.

7. Verfahren nach Anspruch 6, wobei die optische Anzeige den zurückliegenden Verlauf der Qualitätsinformation aufsummiert.

8. Verfahren nach Anspruch 7, wobei die Anzeige je nach Typ des Endpunktes als Indikator, als das Qualitätsproblem beschreibende Klartext-Information und / oder als eindeutiges Symbol erfolgt.

9. Verfahren nach einem der vorstehenden Ansprüche, wobei die Indikation der Qualitätsinformation akustisch erfolgt.

10. Verfahren nach Anspruch 9, wobei die akustische Indikation "in band" über das zur Kommunikation verwendete akustische Ausgabegerät oder über einen separaten akustischen Signalgeber erfolgt.

11. Verfahren nach Anspruch 9 oder 10, wobei die akustische Anzeige als das QualitätsProblem eindeutig beschreibende Ansage in Klartext, oder als Ton oder Tonfolge erfolgt, wobei im Falle des Tones oder der Tonfolge ein Parameter variiert, um die Qualität bzw. den Grad der Abweichung vom Soll- oder Normalzustand der Qualität auszudrücken.

12. Verfahren nach Anspruch 11, wobei der Parameter Lautstärke oder Tonhöhe ist.

13. Verfahren nach einem der Ansprüche 6 bis 12, wobei die optische und akustische Signalisierung kombiniert wird.

14. Verfahren nach einem der vorstehenden Ansprüche, wobei als Qualitätsinformation der Abstand oder die Varianz des Abstandes einzelner IP-Pakete oder eine aufbereitete Information, welche die konkrete Ursache der eingeschränkten Qualität ausdrückt, ausgewertet wird.

15. Vorrichtung zur Beurteilung einer VoIP-Paketerzeugung und -Paketübertragung, mit einem endpunktseitigen Empfänger (B) zum Empfangen einer von einem anderen Endpunkt (A) aus gesendeten VoIP-Paketfolge über eine IP-Netzwerk-Verbindung;
eine endpunktseitige Einrichtung zum Bestimmen der Qualität (QRXA, QRXB) der empfangenen VoIP-Paketfolge (RXA, RXB);
eine endpunktseitige Einrichtung zum Bestimmen der Qualität (QTXA, QTXB) der gesendeten VoIP-Paketfolge (TXA, TXB);
eine endpunktseitige Einrichtung zum Austausch dieser Qualitätsinformation zwischen den beteiligten Endpunkten;
**gekennzeichnet durch**
eine endpunktseitige Einrichtung zum Bestimmen der Differenz der Qualitätsinformation der empfangenen und von dem anderen Endpunkt gesendeten VoIP-Paketfolge und Bestimmen der Differenz der Qualitätsinformation der gesendeten und von der Gegenseite empfangenen VoIP-Paketfolge;
eine endpunktseitige Einrichtung zum Austausch der Differenz der Qualitätsinformation zwischen den beteiligten Endpunkten;
eine Einrichtung zum Zuführen der bestimmten VoIP-Qualitätsinformation zu einer Qualitätsindikation; und
eine endpunktseitige Indikationseinrichtung zur Indikation der Qualitätsinformation in Echtzeit.

16. VoIP-Paketerzeugungs- und -Paketübertragungssystem mit
einem ersten Endpunkt (A) mit einem Sender und einem Empfänger;
einem zweiten Endpunkt (B) mit einem Sender und einem Empfänger;
wobei jeder der beiden Empfänger (A, B) eine Einrichtung zum Bestimmen der Empfänger-Qualität (QRXA, QRXB) der empfangenen VoIP-Paketfolge (RXA, RXB) vom jeweils anderen Endpunkt und zum Übertragen der Empfänger-Qualitätsinformation (QRXA, QRXB) zum Sender-Endpunkt aufweist; wobei der jeweils andere Endpunkt eine Einrichtung zum senderseitigen Bestimmen der Qualität (QTXA, QTXB) dieser gesendeten VoIP-Paketfolge und zum Übertragen der Sende-Qualitätsinformation (QTXA, QTXB) zum Empfängerendpunkt aufweist; **dadurch gekennzeichnet, dass**
(i) der Empfängerendpunkt eine Einrichtung zur Bildung einer ersten Differenz der Qualitätsinformationen und zum Zuführen der bestimmten ersten Differenz-Qualitätsinformation zu einer Qualitätsindikation aufweist, wobei die erste Differenz-Qualitätsinformation aus der Differenz von Empfänger-Qualität und der Sende-Qualität des jeweils anderen Endpunktes ermittelt wird, und der Empfängerendpunkt eine Einrichtung zur Bildung einer zweiten Differenz der Qualitätsinformationen und zum Zuführen der bestimmten zweiten Differenz-Qualitätsinformation zu einer Qualitätsindikation aufweist, wobei die zweite Differenz-Qualitätsinformation aus der Differenz von Sender-Qualität und der Empfangs-Qualität des jeweils anderen Endpunktes ermittelt wird; und/oder
(ii) der Senderendpunkt eine Einrichtung zur Bildung einer ersten Differenz der Qualitätsinformationen und zum Zuführen der bestimmten ersten Differenz-Qualitätsinformation zu einer Qualitätsindikation aufweist, wobei die erste Differenz-Qualitätsinformation aus der Differenz von Sende-Qualität und der Empfänger-Qualität des jeweils anderen Endpunktes ermittelt wird, und der Senderendpunkt eine Einrichtung zur Bildung einer zweiten Differenz der Qualitätsinformationen und zum Zuführen der bestimmten zweiten Differenz-Qualitätsinformation zu einer Qualitätsindikation aufweist, wobei die zweite Differenz-Qualitätsinformation aus der Differenz von Empfangs-Qualität und der Sende-Qualität des jeweils anderen Endpunktes ermittelt wird;
und dass der Empfängerendpunkt und der Senderendpunkt eine Indikationseinrichtung zur Indikation der vorgenannten Qualitätsinformationen in Echtzeit aufweisen.

## Claims

1. A method for assessing VoIP packet generation and transmission, comprising the steps of:
a) end-point reception of a VoIP packet sequence (RXA, RXB) over an IP network link;
b) end-point determination of the VoIP quality (QRXA, QRXB) of the received VoIP packet sequence (RXA, RXB) and end-point determination of the VoIP quality (QTXA, QTXB) of the VoIP packet sequence (TXA, TXB) transmitted by the end point in its function as transmitter, wherein moreover each end point (A, B) transmits the transmission signal quality (QTXA, QTXB) determined in its function as transmitter (A, B) to the other end point, wherein each end point (A, B) transmits the reception signal quality (QRXA, QRXB) determined in its function as receiver (A, B) to the respective other end point, and wherein
(i) at least one end point (A, B) calculates the difference between the reception signal quality (QRXA, QRXB) determined at said end point (A, B) and the transmission signal quality (QTXB, QTXA) determined at the other end point (B, A) from the quality information determined in its function as receiver and the quality information transmitted by the respective other end point in its function as transmitter; and
(ii) the at least one end point (A, B) calculates the difference between the transmission signal quality (QTXA, QTXB) determined at said end point (A, B) and the reception signal quality (QRXB, QRXA) determined at the other end point (B, A) from the quality information determined in its function a transmitter and the quality information transmitted by the other end point in its function as receiver;
c) supply of the determined quality information to a quality indication, wherein the supplied quality information consists of the quality (QRXA, QRXB) of the received VoIP packet sequence (RXA, RXB), the quality (QTXA, QTXB) of the VoIP packed sequence (TXA, TXB) transmitted by the end point in its function as transmitter or a combination thereof, and both quality differences; and
d) end-point indication of the quality information in real time.

2. The method according to claim 1, wherein the quality is determined continuously during a packet transmission and/or at the end of a packet transmission.

3. The method according to any of the preceding claims, wherein the generation of quality information for undisturbed sequences of a packet transmission or completely undisturbed packet transmissions is reduced or completely inhibited.

4. The method according to any of the preceding claims, wherein the generated quality information consists in good/poor statements or in a statement expressing the gradual quality deviation from normal or target conditions and/or the quality information refers to the entire VoIP call or only parts thereof.

5. The method according to any of claims 1-4, wherein an end point (A, B) transmits the quality information difference to the respective other end point.

6. The method according to any of the preceding claims, wherein step d) involves an optical indicator.

7. The method according to claim 6, wherein the optical indicator sums up the preceding quality information development.

8. The method according to claim 7, wherein depending on the type of end point as indicator, indication is made as plain text information describing the quality problem and/or as distinct symbol.

9. The method according to any of the preceding claims, wherein the quality information is indicated acoustically.

10. The method according to claim 9, wherein the acoustic indication is made in band over the acoustic output device used for communication or over a separate acoustic transducer.

11. The method according to claim 9 or 10, wherein the acoustic indication is a message clearly describing the quality problem in plain text, or as tone or tone sequence, wherein in case of the tone or tone sequence one parameter varies so as to express the quality or degree of quality deviation from nominal or target conditions.

12. The method according to claim 11, wherein the parameter is volume or pitch.

13. The method according to any of claims 6 to 12, wherein optical and acoustic indications are combined.

14. The method according to any of the preceding claims, wherein the distance or variance of the distance between individual IP packets or processed information expressing the concrete reasons of a quality restriction is evaluated as quality information.

15. A device for assessing VoIP packet generation and transmission, comprising an end-point receiver (B) for receiving a VoIP packet sequence transmitted from another end point (A) over an IP network link;
end-point means for determining the quality (QRXA, QRXB) of the received VoIP packet sequence (RXA, RXB);
end-point means for determining the quality (QTXA, QTXB) of the transmitted VoIP packet sequence (TXA, TXB);
end-point means for exchanging said quality information between the involved end points;
**characterised by**
end-point means for determining the quality information difference of the received VoIP packet sequence transmitted by the other end point and determining the quality information difference of the transmitted VoIP packet sequence received by the other end point;
end-point means for exchanging the quality information difference between the end points involved;
means for supplying the determined VoIP quality information to a quality indication; and
end-point indication means for indicating the quality information in real time.

16. A VoIP packet generation and transmission system comprising:
a first end point (A) having a transmitter and a receiver;
a second end point (B) having a transmitter and a receiver;
wherein each of the two receivers (A, B) comprises means for determining the receiver quality (QRXA, QRXB) of the received VoIP packet sequence (RXA, RXB) from the respective other end point and for transmitting the receiver quality information (QRXA, QRXB) to the transmitter end point; wherein the respective other end point comprises means for determining at the transmitter side the quality (QTXA, QTXB) of this transmitted VoIP packet sequence and for transmitting the transmission quality information (QTXA, QTXB) to the receiver end point;
**characterised in that**
(i) the receiver end point comprises means for calculating a first difference between the quality information pieces and supplying the determined first quality information to a quality indication, wherein the first difference quality information is calculated from the difference between the reception quality and the transmission quality of the respective other end point; and the receiver end point comprises means for calculating a second difference between the quality information pieces and supplying the determined second difference quality information to a quality indication, wherein the second difference quality information is determined from the difference between the transmitter quality and the receiver quality of the respective other end point; and/or
(ii) the transmitter end point comprises means for calculating a first difference of the quality information pieces and supplying the determined first difference quality information to a quality indication, wherein the first difference quality information is determined from the difference of the transmission quality and the receiver quality at the respective other end point and the transmitter end point comprises means for determining a second difference of quality information and supplying the determined second difference quality information to a quality indication, wherein the second difference quality information is determined from the difference between the receiver quality and the transmitter quality of the respective other end point;
and the receiver end point and the transmitter end point comprise indication means for indicating the aforementioned quality information pieces in real time.

## Revendications

1. Procédé d'évaluation d'une production et d'une transmission de paquets VoIP, comprenant les étampes :
a) de réception aux points d'extrémité d'une suite de paquets VoIP (RXA, RXB) par l'intermédiaire d'une liaison sur réseau IP ;
b) de détermination aux points d'extrémité de la qualité VoIP (QRXA, QRXB) de la suite de paquets VoIP (RXA, RXB) reçus et de détermination aux points d'extrémité de la qualité VoIP (QTXA, QTXB) de la succession de paquets VoIP (TXA, TXB) émis à partir du point d'extrémité lorsqu'il fonctionne en tant qu'émetteur, dans lequel chaque point d'extrémité (A, B) transmet en outre à l'autre point d'extrémité respectif la qualité de signal émis (QTXA, QTXB) établie lorsque ledit chaque point d'extrémité fonctionne en tant qu'émetteur (A, B), dans lequel chaque point d'extrémité (A, B), lorsqu'il fonctionne en tant que récepteur (A, B), transmet à l'autre point d'extrémité respectif la qualité de signal reçu (QRXA, QRXB) établie, et dans lequel
(i) au moins un point d'extrémité (A, B) forme la différence entre la qualité de signal reçu (QRXA, QRXB) établie à ce point d'extrémité (A, B) et la qualité de signal émis (QTXB, QTXA) établie à l'autre point d'extrémité (B, A) à partir de l'information de qualité qui est déterminée lorsque ledit point d'extrémité fonctionne en tant que récepteur, et de l'information de qualité qui est transmise à partir de l'autre point d'extrémité respectif lorsque celui-ci fonctionne en tant qu'émetteur ; et
(ii) ledit au moins un point d'extrémité (A, B) forme la différence entre la qualité de signal émis (QTXA, QTXB) établie à ce point d'extrémité (A, B) et la qualité de signal reçu (QRXB, QRXA) établie à l'autre point d'extrémité (B, A) respectif à partir de l'information de qualité qui est déterminée lorsque ledit point d'extrémité fonctionne en tant qu'émetteur, et de l'information de qualité qui est transmise depuis l'autre point d'extrémité respectif lorsque celui-ci fonctionne en tant que récepteur ;
c) d'amenée de l'information de qualité déterminée à une indication de qualité, dans lequel les informations de qualité amenées sont constituées de la qualité (QRXA, QRXB) de la suite de paquets VoIP (RXA, RXB) reçus, de la qualité (QTXA, QTXB) de la suite de paquets VoIP (TXA, TXB) émis à partir du point d'extrémité lorsque celui fonctionne en tant qu'émetteur, ou de la combinaison des deux, et des deux différences de qualité ; et
d) d'indication aux points d'extrémité de l'information de qualité en temps réel.

2. Procédé selon la revendication 1, dans lequel la détermination de la qualité est réalisée en continu pendant une transmission de paquets et/ou à la fin d'une transmission de paquets.

3. Procédé selon l'une quelconque des revendications précédentes, dans lequel la production d'informations de qualité pour des séquences non perturbées d'une transmission de paquets ou des transmissions de paquets totalement non perturbées est réduite ou totalement supprimée.

4. Procédé selon l'une quelconque des revendications précédentes, dans lequel les informations de qualité produites consistent en de bonnes/mauvaises déclarations ou en une déclaration exprimant la divergence graduelle de qualité par rapport à l'état normal ou théorique et/ou les informations de qualité se rapportent à toute la conversation VoIP, ou uniquement à des parties de celle-ci.

5. Procédé selon l'une quelconque des revendications 1 à 4, dans lequel un point d'extrémité (A, B) transmet la différence entre les informations de qualité à l'autre point d'extrémité respectif.

6. Procédé selon l'une quelconque des revendications précédentes, dans lequel l'étape d) est réalisée sous la forme d'un indicateur optique.

7. Procédé selon la revendication 6, dans lequel l'affichage optique totalise l'évolution antérieure des informations de qualité.

8. Procédé selon la revendication 7, dans lequel l'affichage revêt, en fonction du type du point d'extrémité, la forme d'un indicateur, la forme d'une information de texte en clair décrivant le problème de qualité et/ou la forme d'un symbole clair.

9. Procédé selon l'une quelconque des revendications précédentes, dans lequel l'indication de l'information de qualité s'effectue de manière acoustique.

10. Procédé selon la revendication 9, dans lequel l'indication acoustique s'effectue « dans la bande passante » par l'intermédiaire de l'appareil de sortie acoustique utilisé pour la communication ou par l'intermédiaire d'un générateur de signaux acoustiques séparé.

11. Procédé selon la revendication 9 ou 10, dans lequel l'indication acoustique revêt la forme d'une annonce en texte clair décrivant clairement le problème de qualité, ou la forme d'un son ou d'une suite de sons, dans lequel un paramètre varie dans le cas du son ou de la suite de sons, afin d'exprimer la qualité ou le degré de divergence par rapport à l'état théorique ou normal de la qualité.

12. Procédé selon la revendication 11, dans lequel le paramètre est l'intensité sonore ou la hauteur du son.

13. Procédé selon l'une quelconque des revendications 6 à 12, dans lequel la signalisation optique et acoustique est combinée.

14. Procédé selon l'une quelconque des revendications précédentes, dans lequel l'écart ou la variance de l'écart entre différents paquets IP ou une information traitée, laquelle exprime la cause concrète de l'insuffisance de qualité, est évalué(e) en tant qu'information de qualité.

15. Dispositif d'évaluation d'une production et d'une transmission de paquets VoIP, comprenant un récepteur (B) au point d'extrémité destiné à recevoir une suite de paquets VoIP émis à partir d'un autre point d'extrémité (A) par l'intermédiaire d'une liaison sur réseau IP ;
un système aux points d'extrémité pour la détermination de la qualité (QRXA, QRXB) de la suite de paquets VoIP (RXA, RXB) reçus ;
un système aux points d'extrémité pour la détermination de la qualité (QTXA, QTXB) de la suite de paquets VoIP émis (TXA, TXB) ;
un système aux points d'extrémité pour l'échange de cette information de qualité entre les points d'extrémité impliqués ;
**caractérisé par**
un système aux points d'extrémité pour la détermination de la différence entre l'information de qualité de la suite de paquets VoIP reçus et la suite de paquets VoIP émis à partir de l'autre point d'extrémité et la détermination de la différence d'information de qualité entre la suite de paquets VoIP émis et la suite de paquets VoIP reçus par le côté opposé ;
un système au point d'extrémité pour l'échange de la différence d'information de qualité entre les points d'extrémité impliqués ;
un système d'amenée de l'information de qualité VoIP déterminée à une indication de qualité ; et
un système d'indication aux points d'extrémité pour l'indication de l'information de qualité en temps réel.

16. Système de production et de transmission de paquets VoIP comprenant
un premier point d'extrémité (A) présentant un émetteur et un récepteur ;
un deuxième point d'extrémité (B) présentant un émetteur et un récepteur ;
dans lequel chacun des deux récepteurs (A, B) comprend un système de détermination de la qualité de réception (QRXA, QRXB) de la suite de paquets VoIP (RXA, RXB) reçus à partir de l'autre point d'extrémité respectif et de transmission de l'information de qualité de réception (QRXA, QRXB) au point d'extrémité d'émission, dans lequel l'autre point d'extrémité respectif présente un système pour la détermination côté émetteur de la qualité (QTXA, QTXB) de cette suite de paquets VoIP émis et pour la transmission de l'information de qualité d'émission (QTXA, QTXB) au point d'extrémité récepteur ; **caractérisé en ce que**
(i) le point d'extrémité récepteur comprend un système pour la formation d'une première différence entre les informations de qualité et pour l'amenée de la première différence déterminée entre les informations de qualité à une indication de qualité, dans lequel la première différence entre les informations de qualité est déterminée à partir de la différence entre la qualité de réception et la qualité d'émission de l'autre point d'extrémité respectif, et le point d'extrémité récepteur comprend un système pour la formation d'une deuxième différence entre les informations de qualité et pour l'amenée de la deuxième différence déterminée entre les informations de qualité à une indication de qualité, dans lequel la deuxième différence entre les informations de qualité est établie à partir de la différence entre la qualité d'émission et la qualité de réception de l'autre point d'extrémité respectif ; et/ou
(ii) le point d'extrémité émetteur comprend un système pour la formation d'une première différence entre les informations de qualité et l'amenée de la première différence déterminée entre les informations de qualité à une indication de qualité, dans lequel la première différence entre les informations de qualité est établie à partir de la différence entre la qualité d'émission et la qualité de réception de l'autre point d'extrémité respectif, et le point d'extrémité émetteur comprend un système pour la formation d'une deuxième différence entre les informations de qualité et l'amenée de la deuxième différence déterminée entre les informations de qualité à une indication de qualité, dans lequel la deuxième différence entre les informations de qualité est établie à partir de la différence entre la qualité de réception et la qualité d'émission de l'autre point d'extrémité respectif ;
et **en ce que** le point d'extrémité récepteur et le point d'extrémité émetteur comprennent un système d'indication pour l'indication en temps réel des informations de qualité préalablement citées.
